(19) Europäisches Patentamt

European Patent Office

Office européen des brevets

(11) Veröffentlichungsnummer: **0 002 507**
**B1**

(12) **EUROPÄISCHE PATENTSCHRIFT**

(21) Anmeldenummer: **78101616.7**

(22) Anmeldetag: **08.12.78**

(51) Int. Cl.³: **E 05 C 1/06**

(54) Verschluß für abklappbare und auspendelbare Bordwände von Lastfahrzeugen

(30) Priorität: **09.12.77 DE 2754938**

(43) Veröffentlichungstag der Anmeldung:
**27.06.79 Patentblatt 79/13**

(45) Bekanntmachung des Hinweises auf die Patenterteilung:
**30.04.80 Patentblatt 80/09**

(84) Benannte Vertragsstaaten:
**BE CH FR GB IT LU NL SE**

(56) Entgegenhaltungen:
**DE - A - 2 527 033**
**DE - C - 927 675**
**DE - C - 964 381**
**GB - A - 1 515 562**
**US - A - 1 440 884**

(73) Patentinhaber: **F. Hesterberg & Söhne**
**Heilenbecker Strasse 50 - 60**
**D - 5828 Ennepetal 1 (DE)**

(72) Erfinder: **Sickel, Hans Werner**
**Kinzigstrasse 2**
**D - 5800 Hagen (DE)**

(74) Vertreter: **Kneissl, Richard, Dr.**
**Widenmayerstrasse 46**
**D - 8000 München 22 (DE)**

Courier Press, Leamington Spa, England.

Verschluß für abklappbare und auspendelbare Bordwände von Lastfahrzeugen

Die Erfindung betrifft einen Verschluß für abklappbare und auspendelbare Bordwände von Lastfahrzeugen mit einem an einem festen Aufbauteil, insbesondere Stirnwand oder Runge, anbringbaren Gehäuse, das zur Aufnahme eines an einer Bordwand waagrecht befestigten Pendelzapfens mit einem Fangmaul und einem zum Halten des Pendelzapfens dieses verschließenden stirnseitig abgeschrägten Riegel versehen ist, der durch einen unten an ihm angelenkten Betätigungshebel lotrecht verschiebbar ist.

Ein Verschluß dieser Art ist aus der DE—OS—25 27 033 bekannt, Er besitzt eine ziemlich aufwendige Konstruktion und eine beträchtliche Bauhöhe, so daß er beispielsweise nicht seitlich an einer Runge eines Lastfahrzeugs angebracht werden kann. Es ist erwünscht, daß Verschlüsse dieser Art direkt seitlich auf ein feststehendes Teil eines Aufbauteils, wie z.B. einer Runge, aufgebracht werden können, so daß keine Teile über die obere Kante der Bordwände bzw. Rungen vorragen. Zur wirtschaftlichen Ausnutzung der Ladekapazität von Lastfahrzeugen für die verschiedensten Agrarerzeugnisse (Korn, Rüben usw.) müssen nämlich die Fahrzeuge nach Bedarf mit zusätzlichen Aufsetzbordwänden versehen werder, die mit ihren unteren Begrenzungsflächen korndicht an den oberen Begrenzungsflächen der unteren Bordwände anliegen müssen. Die Aufsetzbordwände dürfen aus diesem Grunde an ihren unteren Ecken keine Aussparungen haben, wie sie für Verschlüsse bekannter Bauart, die über die obere Stirnseite der unteren Bordwand hinausragen, erforderlich sind.

Es ist natürlich selbstverständlich, daß solche seitlich von einer Bordwand vorspringenden Verschlüsse nur eine geringe Bauhöhe haben dürfen, damit ein Lastfahrzeug, sollte es knapp an einem Hindernis vorbeifahren, dieses nicht berührt. Die entsprechenden Richtlinien für solche Verschlüsse in der Bundesrepublik Deutschland besagen, daß sie eine Bauhöhe von 30 mm nicht überschreiten dürfen.

Der bekannte Verschluß der eingangs skizzierten Art besitzt außerdem den Nachteil, daß er nur ein geringes Heranholvermögen besitzt, so daß verbogene Bordwände nur mit Mühe zu schließen sind.

Der Erfindung lag die Aufgabe zugrunde, einen einfachen Verschluß für abklappbare und auspendelbare Bordwände der eingangs genannten Art zu schaffen, der in einer geringen Bauhöhe hergestellt werden kann, einen einfachen Aufbau besitzt und außerdem ein wesentliches Heranholvermögen für den an einer Bordwand angebrachten Pendelzapfen hat.

Die Aufgabe wird erfindungsgemäß dadurch gelöst, daß das Gehäuse U-förmig nach vorne offen ausgebildet ist und der Riegel mittels Führungszapfen in Kulissenaussparungen der beiden Seitenwände des Gehäuses und durch den Betätigungshebel derart geführt ist, daß beim Heben des Riegels zumindest dessen den Pendelzapfen im Fangmaul haltender Teil in Richtung zur Rückseite des Gehäuses bewegt wird.

Es soll darauf hingewiesen werden, daß die Ausdrücke "Vorderseite, Rückseite, Oberseite und Unterseite" bei der Beschreibung dieses Verschlusses so zu verstehen sind, wie sie in Betrachter sieht, der direkt vor einem solchen auf einem Lastfahrzeug befestigten Verschluß steht.

Dadurch, daß das Gehäuse für den Riegel zur Vorderseite hin offen ist, kann der Riegel beim Senken nach vorne herausbewegt werden, so daß der oben am Riegel vorgesehene Verschlußzapfen unterhalb und vorderhalb des Fangmauls zu liegen kommt. Wird der Riegel dann nach oben geschoben, so führt der Verschlußzapfen nicht nur eine Hebebewegung, sondern auch eine Drückbewegung in Richtung auf das Fangmaul durch, so daß der Pendelzapfen einer etwa verbogenen Bordwand in gewissem Ausmaß auch herangeholt werden Kann.

Die Bewegung zumindest des oberen Teils des Riegels in Richtung zur Rückseite des Gehäuses des Verschlusses kann mittels der erwähnten Kulissenaussparungen und Führungszapfen grundsätzlich auf zwei Wegen erfolgen. Der Riegel kann durch eine entsprechende Formung der Kulissenaussparungen beim Heben eine Parallelverschiebung in Richtung auf die Rückseite des Gehäuses durchführen.

Es ist aber auch möglich, den Riegel nur im Oberteil des Gehäuses angebrachte geradlinige und senkrechte Kulissenaussparungen zu führen und beim Heben des Riegels den Unterteil desselben von der Gehäuserückwand wegzubewegen, so daß der Riegel um die in den Kulissenaussparungen geführten Führungszapfen eine Schwenkbewegung durchführt, so daß der Oberteil und somit der Verschlußzapfen des Riegels in die entgegengesetzte Richtung, also in Richtung auf die Rückseite und in das Fangmaul hinein, bewegt wird.

Durch das Fehlen der vorderen Begrenzungswand am Riegelgehäuse ist eine sehr niedrige Bauhöhe bei ausreichender Stabilität gewährleistet.

Verschiedene Ausführungsformen des erfindungsgemäßen Verschlusses sollen nun anhand der beigefügten Zeichnungen näher beschrieben werden.

Die Zeichnungen zeigen in perspektivischer Darstellung:

Abbildung 1 einen Rungenabschnitt mit vormontiertem erfindungsgemäßen Verschluß und eine Bordwandecke mit Pendelzapfen, wobei der Verschluß in geschlossener Stellung und die Bordwand in ausgependeltem Zustand zu sehen sind;

Abbildung 2 den gleichen Rungenabschnitt mit vormontierter Verschlußeinheit und die gleiche Bordwandecke mit Pendelzapfen wie in Abb. 1, jedoch ist der Verschluß in geöffneter Stellung und die Bordwand in ausgeklapptem Zustand zu sehen;

Abbildung 3 den Verschluß gemäß Abb. 1 und 2 mit Ausbrüchen am Gehäuse, damit Durchbrüche in der Rückwand des Gehäuses zu sehen sind; und

Abb. 4 bis 6 je eine weitere Ausführungsform des erfindungsgemäßen Verschlusses.

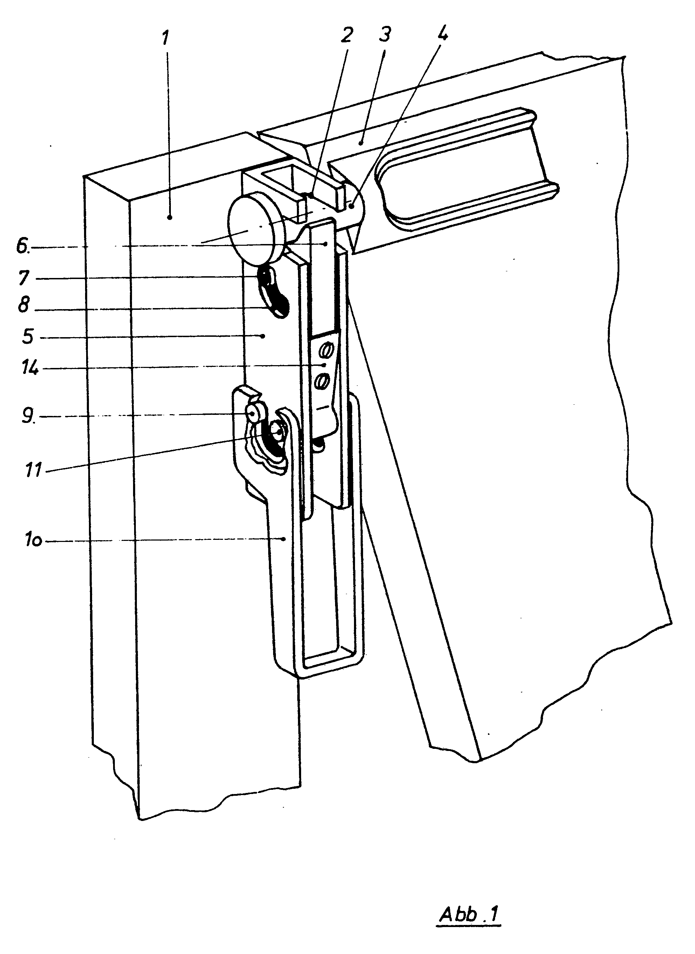

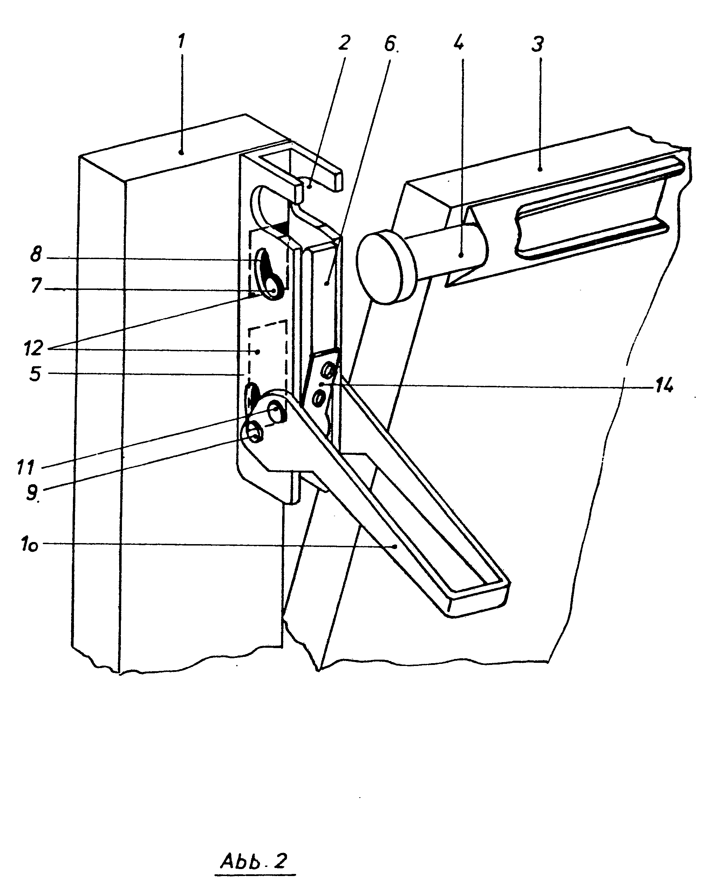

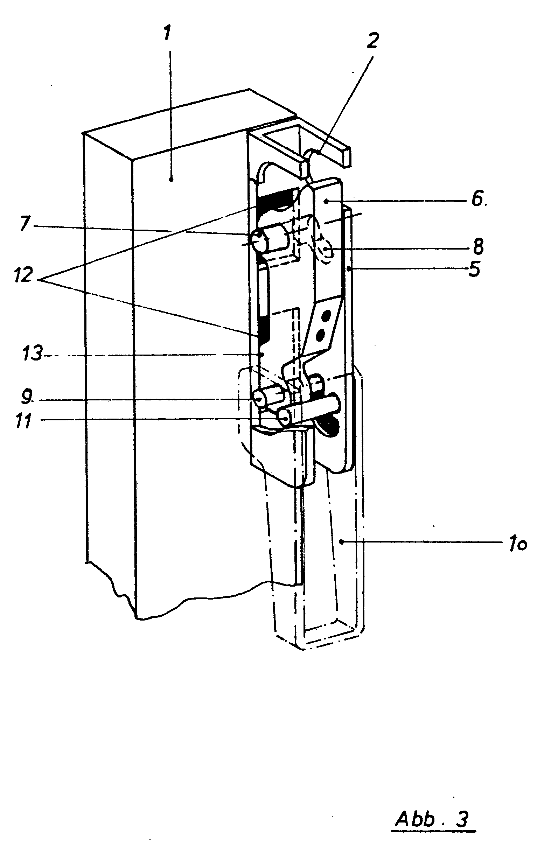

In den Abb. 1 bis 3 ist vor einem als Runge ausgebildeten Aufbauteil 1 ein erfindungsgemäßer Verschluß mit Fangmaul bzw. Pendellager 2 und vor einer oberen Bordwandecke 3 ein Pendelzapfen 4 angebracht. Das Fangmaul 2 ist in der Oberseite eines nach vorne hin offenen U-förmigen Gehäuses 5 ausgebildet. In diesem Gehäuse 5 ist ein Riegel 6 verschiebar angeordnet, der oben so ausgebildet ist, daß er in geschlossener Stellung zusammen mit dem Fangmaul ein geschlossenes Lager für den Pendelzapfen 4 bildet.

Der Riegel 6 ist mittels beidseitig angebrachter Führungszapfen 7 und 9 in unteren und oberen bogenförmigen Aussparungen 8 gelagert. Es ist ersichtlich, daß durch diese Führungszapfen 7 bzw. 9 und die bogenförmigen Aussparungen 8 der Riegel beim Hehen gleichzeitig in Richtung zur Rückseite des Gehäuses 5 bewegt wird. Hierdurch wird ein besonders gutes Heranholen für den Pendelzapfen 4 und damit auch für die Bordwand 3 gewährleistet. Die Führungszapfen 9 bilden eine Achse, die direkt an einem Betätigungshebel 10 angelenkt ist. Außerdem ist der Betätigungshebel 10 mittels einer Achse 11 am Gehäuse 5 angelenkt, wobei in Schließstellung des Betätigungshebels 10 die Führungszapfen 9 und die Achse 11 in einer etwa waagrechten Linie liegen. Diese Anordnung bewirkt, daß bei einem Druck des Pendelzapfens 4 in Öffnungsrichtung der Bordwand auf die Spitze des Riegels 6 ein Drehmoment entsteht, wodurch der Riegel mit seinem unteren Ende einen nach hinten gerichteten Druck gegen die Runge erhält, so daß trotz der einfachen Anordnung eine Selbstöffnungsgefahr des Verschlusses nicht gegeben ist.

Das Gehäuse 5 ist zur Verringerung der Bauhöhe im Boden mit Aussparungen 12 versehen, während der Riegel 6 an der Rückseite einen Ansatz 13 aufweist, die in Verschließstellung des Riegels direkt an der Runge anliegt, so daß die auftretenden Kräfte wirksam abgefangen werden können. Für die zusätzliche Absicherung der Öffnungs- und Schließstellung des Verschlusses ist eine auf der Vorderseite des Riegels 6 befestigte Flachfeder 14, die sich auf der Achse 11 abstützt, vorgesehen.

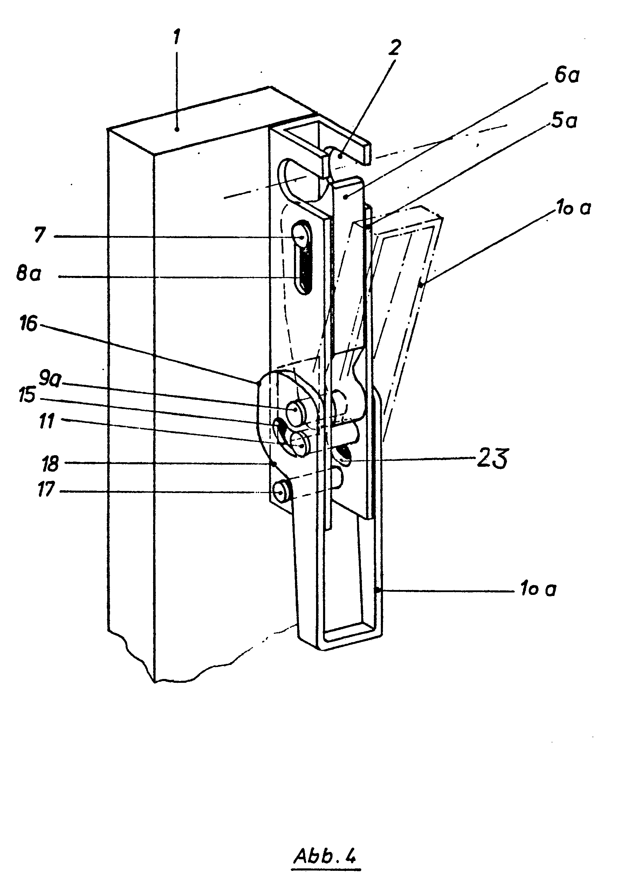

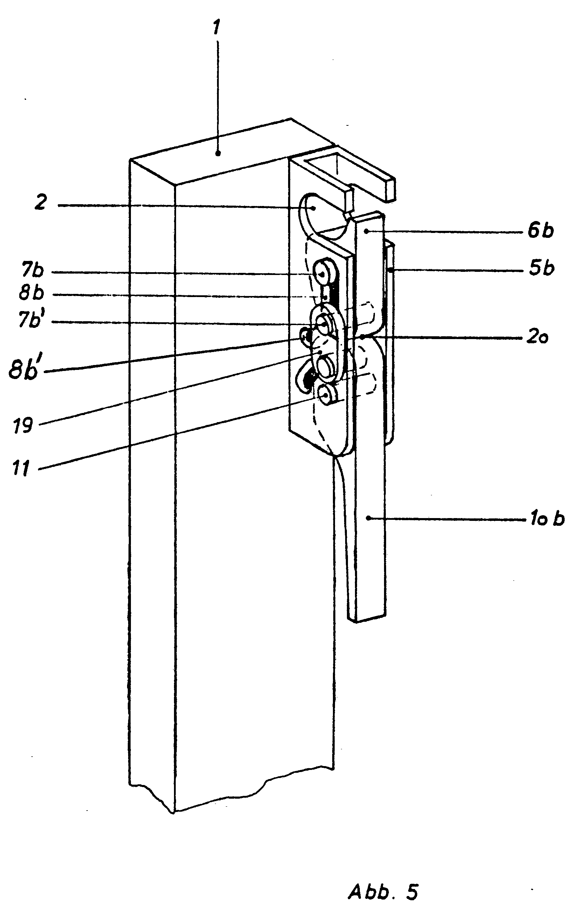

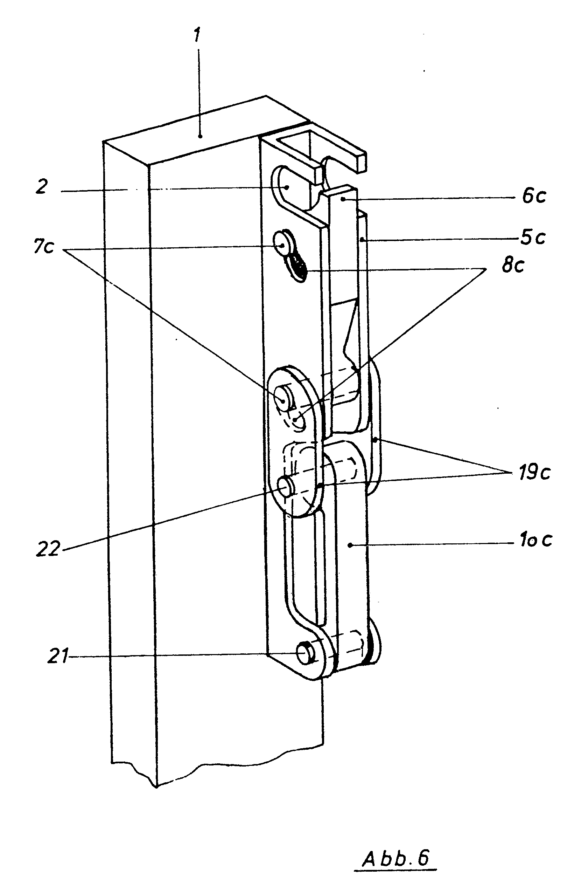

Bei der folgenden Beschreibung der Ausführungsformen gemäß den Abb. 4 und 6 werden für gleiche Teile gleiche Bezugzeichen verwendet, die aber, sofern sie eine andere Ausbildung aufweisen, mit dem Buchstaben (a) (Abb. 4), mit dem Buchstaben (b) (Abb. 5) bzw. dem Buchstaben (c) (Abb. 6) ergänzt sind.

Die Ausführungsform gemäß Abb. 4 besitzt ein U-förmiges Gehäuse 5a mit senkrechten, geradlinigen Kulissenaussparungen 8a. Ein Betätigungshebel 10a und ein Riegel 6a sind über eine Anlenkachse 9a miteinander verbunden. Damit diese Achse die er forderlichen Bewegungen ausführen kann, sind in den Seitenwänden des Gehäuses 5a entsprechende Ausnehmungen 23 vorgesehen. Die Verbindung des Betätigungshebels 10a mit dem Gehäuse 5a erfolgt über die Achse 11. Letztere ist bei dieser Ausführungsform einerseits fest mit dem Gehäuse 5a verbunden, andererseits aber in kulissenähnliche Aussparungen 15 im Betätigungshebel 10a geführt.

Das Heranholen des Pendelzapfens erfolgt beim Schließen des Handhebels 10a dadurch, daß die durch den unteren Teil des Riegels 6a hindurchgehende Anlenkachse 9a mittels einer Kurvenfläche 16 am Betätigungshebel 10a, die sich an der Runge 1 abstützt, nach vorne geknebelt wird. Der Riegel 6a führt dabei um die Führungszapfen 7 eine Kippbewegung durch, so daß die obere Nase des Riegels 6a gleichzeitig in Richtung auf die Rückseite des Gehäuses bewegt wird und damit den Pendelzapfen heranholt. Die Kurvenfläche 16 ist dort, wo sie in Verschlußstellung an der Runge 1 anliegt, abgeflacht, so daß der Betätigungshebel 10a in der Verschlußstellung arretiert wird. Eine Kurvenfläche 18 gleitet beim Schließen des Betätigungshebels 10a auf den Stummeln einer Achse 17 und dient zur Einsteuerung der Kurvenfläche 16a beim Verschließvorgang.

Die kulissenähnlichen Aussparungen 15 gestatten es, daß der Betätigungshebel 10a weit nach oben geklappt werden kann und im geöffneten Zustand nicht absteht.

Die Ausführungsform gemäß Abb. 5 besitzt ein U-förmiges Gehäuse 5b mit oberen senkrecht verlaufenden schlitzförmigen Kulissenaussparungen 8b und unteren gebogenen Kulissenaussparungen 8b'. In diesen sind Führungszapfen 7b bzw. 7b' geführt. Es ist ohne weiteres einzusehen, daß beim Anheben des Riegels 6b dieser um die Führungszapfen 7b eine Kippbewegung derart ausführt, daß die obere Nase des Riegels 6b in das Fangmaul 2 hineiengekippt wird. Die Verbindung Zwischen dem Betätigungshebel 10b und dem Riegel 5b erfolgt durch Übertragungsglieder 19. Die Berührungsflächen zwischen dem Betätigungshebel 10b und dem Riegel 5b stützen sich im Spalt 20 in Verschließstellung aufeinander ab.

Die Abb. 6 zeigt einen Verschluß mit U-förmigem Gehäuse 5c, bei welcher der Riegel 6c durch Führungszapfen 7c in gebogenen kulissenartigen Aussparungen 8c in etwa in der gleichen Weise geführt wird, wie bei der in den Abb. 1 bis 3 dargestellten Ausführungstorm. Der Betätigungshebel 10c ist hier jedoch als Kniehebel ausgebildet, der um eine Achse 21 schwenkbar ist. Durch die Oberseite des Kniehebels erstreckt sich eine Achse 22, an der Übertragungsglieder 19c angelenkt sind. Die Oberseite der Übertragungsglieder ist an den Führungszapfen 7c angelenkt. Zum Öffnen und Schließen des Verschlusses muß die Anlenkstelle 22 in waagrechter Richtung von der Bordwand weggezogen bzw. wieder hineingedrückt werden.

**Patentansprüche**

1. Verschluß für abklappbare und auspendelbare Bordwände von Lastfahrzeugen mit einem an einem festen Aufbauteil, insbesondere Stirnwand oder Runge, anbringbaren Gehäuse, das zur Aufnahme eines an einer Bordwand waagrecht befestigten Pendelzapfens mit einem Fangmaul und einem zum Halten des Pendelzapfens dieses verschließenden stirnseitig abgeschrägten Riegel versehen ist, der durch einen unten an ihm angelenkten Betätigungshebel lotrecht verschiebbar ist, dadurch gekennzeichnet, daß das Gehäuse (5) U-förmig nach vorn offen ausgebildet ist und der Riegel (6) mittels Führungszapfen (7) in Kulissenaussparungen (8) der beiden Seitenwände des Gehäuses (5) und durch den Betätigungshebel (10) derart geführt ist, daß beim Heben des Riegels (6) zumindest dessen den Pendelzapfen (4) im Fangmaul (2) haltender Teil in Richtung zur Rückseite des Gehäuses (5) bewegt wird.

2. Verschluß nach Anspruch 1, dadurch gekennzeichnet, daß der Riegel (6) vier paarweise zu beiden Seiten übereinanderliegende Führungszapfen (7, 9) aufweist, die in vier entsprechenden zur Rückseite des Gehäuses hin ansteigenden Kulissenaussparungen (8) geführt sind.

3. Verschluß nach den Ansprüchen 1 und 2, dadurch gekennzeichnet, daß der Betätigungshebel (10) ein bügelförmig ausgebildeter Winkelhebel ist, der mit seiner Winkelanlenkstelle (11) am Gehäuse (5) und an seinem kürzeren Schenkel am Riegel (6) angelenkt ist, derart, daß bei in Schließstellung befindlichem längerem Schenkel die Anlenkstellen etwa waagrecht liegen.

4. Verschluß nach Anspruch 2 oder 3, dadurch gekennzeichnet, daß in der Rückseite des U-förmigen Gehäuses (5) eine oder mehrere Aussparungen (12) vorgesehen sind, durch die Ansätze (13) des Riegels (6) unmittelbar am Aufbauteil (1) anliegen.

5. Verschluß nach Anspruch 1, dadurch gekennzeichnet, daß die den Führungszapfen (7) zugeordneten Kulissenaussparungen (8a) als senkrechte Schlitze ausgebildet sind und daß der untere Teil des Riegels (6a) beim Schließen des Betätigungshebels (10a) nach vorne wegbewegt wird.

6. Verschluß nach Anspruch 5, dadurch gekennzeichnet, daß der Betätigungshebel (10a) als Bügel ausgebildet ist und Kurvenflächen (16) aufweist, die am Aufbauteil (1) anliegen und so geformt sind, daß sie beim Schließen des Betätigungshebels (10a) den am Betätigungshebel angelenkten Unterteil des Riegels (6a) vom Aufbauteil (1) wegknebeln.

7. Verschluß nach Anspruch 6, dadurch gekennzeichnet, daß der Betätigungshebel (10a) mit einem Paar Kulissenaussparungen (15) versehen ist, die in entsprechende Führungszapfen (11) am U-förmigen Gehäuse (5a) eingreifen.

8. Verschluß nach Anspruch 5, dadurch gekennzeichnet, daß der Riegel (6b) an seinem unteren Teil mit einem weiteren Zapfenpaar (7b') in Kulissenaussparungen (8b') geführt ist, die zur Vorderseite hin ansteigen.

9. Verschluß nach Anspruch 8, dadurch gekennzeichnet, daß die Verbindung zwischen der Unterseite des Riegels (6b) des Betätigungshebels (10b) über ein Übertragungsglied (19) erfolgt.

10. Verschluß nach Anspruch 2, dadurch gekennzeichnet, daß zum Verschieben des Riegels (6c) ein Kniehebel, bestehend aus dem mit seinem freien Ende am Gehäuse angelenkten Betätigungshebel (10c) und mindestens einem mit seinem freien Ende am Riegel angelenkten Übertragungsglied (19c), vorgesehen ist.

**Claims**

1. Closure device for the hinged sides of lorries which can swing out, having a housing for fixing to a rigid part of the superstructure, particularly end face or stanchion, which housing has a bolt bevelled on the front face for receiving a swivel pin and a catch horizontally secured to a side of the lorry and for holding the swivel pin and closing the catch, which bolt is vertically displaceable by means of an operating lever connected to the bottom of the bolt characterized in that the housing (5) is U-shaped open at the front and the bolt (6) is guided by means of guide pins (7) in sliding block recesses (8) of the two side walls of the housing (5) and guided by the operating lever (10) in such a way that when the bolt (6) is raised at least the part holding the swivel pin (4) in the catch (2) is moved towards the rear side of the housing (5).

2. Closure device according to Claim 1, characterized in that the bolt (6) comprises four sets of guide pins (7, 9) arranged in pairs on top of each other on both sides, which are guided in four corresponding sliding block recesses (8) inclined upwards with respect to the rear side of the housing.

3. Closure device according to Claim 1 and 2, characterized in that the operating lever (10) is a handle-shaped toggle lever which has its toggle contact point (11) on the housing (5) and with its shorter limb contacts the bolt (6) in such a way that with the longer limb in the locked position the contact points are approximately horizontal.

4. Closure device according to Claim 2 or 3, characterized in that the rear side of the U-shaped housing (5) has at least one recess (12) by means of which shoulders (13) of bolt (6) make direct contact with the part of the superstructure (1).

5. Closure device according to Claim 1, characterized in that the sliding block recesses (8a) for the guide pin (7) are adapted as vertical slots and the lower part of the bolt (6a) is moved forward during closing of the operating lever (10a).

6. Closure device according to Claim 1, characterized in that the operating lever (10a) is adapted to be in the shape of a handle and has curved surfaces (16) which rest against the superstructure (1) and are so shaped that when closing the operating lever (10a) the lower part of the bolt (6a) connected to the operating lever is toggle-levered from the superstructure part (1).

7. Closure member according to claim 6, characterized in that the operating lever (10a) is provided with a pair of sliding block recesses (15) which engage with corresponding guide pins (11) in U-shaped housing (5a).

8. Closure member according to Claim 5, characterized in that the lower part of the bolt (6b) with a further pair of pins (7b') is guided in sliding block recesses (86') which incline upwards to the front.

9. Closure member according to Claim 8, characterized in that the connection between the lower side of the bolt (6b) of the operating lever (10b) is effected by a translatory member (19).

10. Closure device according to Claim 2, characterized in that for sliding the bolt (6c) there is provided a toggle lever comprising the operating lever (10c) connected to the housing with its free end and at least one translatory member (19c) connected with its free end to the bolt.

**Revendications**

1. Dispositif de verrouillage pour panneaux rabattables et basculants de véhicules utilitaires, comportant un boîtier qui, pouvant être monté sur un élément de construction fixe, en particulier un panneau extrême ou ranchet, présente une encoche d'arrêt destinée à loger un pivot fixé horizontalement sur un panneau, ainsi qu'un verrou qui, fermant cette uncoche pour bloquer le pivot, présente une face extrême biseautée et peut être déplacé verticalement par un levier de commande articulé à son extrémité inférieure, dispositif caractérisé en ce que ledit boîtier (5) est profilé en U s'ouvrant vers l'avant, et en ce que ledit verrou (6) est guidé par des goujons (7) glissant dans des boutonnières (8) des deux faces latérales dudit boîtier (5) et par le levier de commande (10), de telle sorte que, lorsque ce verrou (6) est soulevé, au moins sa partie retenant ledit pivot (4) fixé sur le panneau (3) dans ladite encoche d'arrêt (2) soit déplacé en direction de la face postérieure dudit boîtier (5).

2. Dispositif selon la revendication 1, caractérisé en ce que le verrou (6) présente quatre goujons de guidage (7, 9) superposés par pairs sur chacun de ses côtés, qui glissent dans quatre boutonnières complémentaires (8) s'étendant vers le haut en direction de la face postérieure du boîtier.

3. Dispositif selon l'une des revendications 1 et 2, caractérisé en ce que le levier de commande (10) est un levier fourchu en forme d'étrier, qui est articulé par sa portée (11) sur le boîtier (5) et par sa branche la plus courte sur le verrou (6), de telles sorte que les portées soient approximativement alignées horizontalement lorsque sa branche la plus longue est en position de fermeture.

4. Dispositif selon l'une des revendications 2 et 3, caractérisé en ce qu'un ou plusieurs évidements (12) sont ménagés dans la face postérieure du boîtier (5), grâce auxquels des saillies (13) du verrou (6) sont directement en contact avec l'élément de construction (1).

5. Dispositif selon la revendication 1, caractérisé en ce que les boutonnières (8a) associées aux goujons de guidage (7) ont la forme d'encoches verticales et en ce que la partie inférieure du verrou (6a) est déplacée vers l'avant lors de la fermeture du levier de commande (10a).

6. Dispositif selon la revendication 5, caractérisé en ce que le levier de commande (10a) a la forme d'un étrier et présente des faces courbes (16) en contact avec l'élément de construction (1) et configurées de telle sorte que, lors de la fermetu e du levier de commande (10a), elles déplacent la partie inférieure du verrou (6a), articulée sur ledit levier de commande (10a) et jusqu'alors en contact avec ledit élément (1).

7. Dispositif selon la revendication 6, caractérisé en ce que le levier de commande (10a) présente une paire de boutonnières (15) dans lesquelles glissent des goujons de guidage (11) complémentaires du boîtier (5a) en forme de U.

8. Dispositif selon la revendication 5, caractérisé en ce que le verrou (6b) est guidé à sa partie inférieure par une autre paire de goujons (7b') glissant dans des boutonnières (8b') s'étendant vers le haut et vers l'avant.

9. Dispositif selon la revendication 8, caractérisé en ce que la liaison entre la partie inférieure du verrou (6b) et le levier de commande (10b) est assurée par un organe de transmission (19).

10. Dispositif selon la revendication 2, caractérisé en ce que la liaison entre la partie verrou (6c), il est prévu un levier articulé comprenant le levier de commande (10c) articulé par son extrémité libre sur le boîtier, et au moins un organe de transmission (19c) articulé par son extrémité libre sur le verrou.

_Abb .1_

0 002 507

Abb. 2

2

Abb. 3

Abb. 4

*Abb. 5*

*Abb. 6*